# EUROPÄISCHE PATENTSCHRIFT

(11) **EP 4 553 005 B1**
(45) Veröffentlichungstag und Bekanntmachung des Hinweises auf die Patenterteilung: **01.07.2026**
(21) Anmeldenummer: 23208343.6
(22) Anmeldetag: 07.11.2023
(51) Int. Cl.: B65G 1/04

(54) **WAREN-LAGERSYSTEM UND VERFAHREN ZUM ANHEBEN UND/ODER ABSENKEN WENIGSTENS EINES BEHÄLTERS IN EINEM WAREN-SPEICHER DES WAREN-LAGERSYSTEMS**
GOODS STORAGE SYSTEM AND METHOD FOR RAISING AND/OR LOWERING AT LEAST ONE CONTAINER IN A GOODS STORE OF THE GOODS STORAGE SYSTEM
SYSTÈME DE STOCKAGE DE MARCHANDISES ET PROCÉDÉ POUR SOULEVER ET/OU ABAISSER AU MOINS UN CONTENEUR DANS UN MAGASIN DE MARCHANDISES DU SYSTÈME DE STOCKAGE DE MARCHANDISES

(43) Veröffentlichungstag der Anmeldung: 14.05.2025
(73) Patentinhaber: Swisslog AG, 5033 Buchs/Aarau (CH)
(72) Erfinder: RUSCHEWEYH, Felix, 44229 Dortmund (DE); RHODE, Marc, 21077 Hamburg (DE)
(74) Vertreter: Böss, Dieter Alexander

(56) Entgegenhaltungen:
- EP-A1- 3 995 415
- EP-B1- 3 820 791
- NO-A1- 20 220 036

## Beschreibung

Die Erfindung betrifft ein Waren-Lagersystem mit einem Waren-Speicher, der mehrere Lagerschächte aufweist, die in mehreren Reihen und Spalten unmittelbar nebeneinander angeordnet sind, derart, dass jeder Lagerschacht über eine obere Schachtöffnung zugänglich ist zum Entnehmen ein oder mehrerer Behälter aus dem jeweiligen Lagerschacht von oben und/oder zum Einsetzen ein oder mehrerer Behälter in den jeweiligen Lagerschacht von oben, so dass mehrere Behälter in einem vertikalen Stapel innerhalb des jeweiligen Lagerschachtes gelagert werden können. Die Erfindung betrifft außerdem ein Verfahren zum Anheben und/oder Absenken wenigstens eines Behälters in einem Waren-Speicher eines Waren-Lagersystems.

Die EP 3 820 791 B1 offenbart ein Waren-Lagersystem nach dem Oberbegriff des Anspruchs 1. Das Dokument beschreibt ein Lagersystem, das eine Mehrzahl von vertikalen Stapeln aus Lagerbehältern aufweist, wobei die Stapel in einer horizontalen ersten Richtung und einer horizontalen zweiten Richtung, welche senkrecht zur ersten Richtung ist, angeordnet sind, eine Transporteinheit zum Transportieren mindestens eines Behälters zu oder von einem ausgewählten Stapel in der ersten und/oder zweiten Richtung, eine Behälterhandhabungsvorrichtung zum Transferieren mindestens eines oberen Behälters von einem ausgewählten Stapel aus zu der Transporteinheit, bevor die Transporteinheit mitsamt dem Behälter von dem genannten ausgewählten Stapel aus transportiert wird, und zum Transferieren mindestens eines Behälters von der Transporteinheit aus zum oberen Ende eines ausgewählten Stapels, nachdem die Transporteinheit mitsamt dem Behälter zu dem genannten ausgewählten Stapel transportiert wird, wobei die Transporteinheit oberhalb der Stapel bewegbar ist, wobei die Behälterhandhabungsvorrichtung ein Hebeelement aufweist zum Verlagern eines ausgewählten Stapels in vertikaler Richtung in Bezug auf benachbarte Stapel, wobei das Hebeelement unterhalb der Stapel bewegbar ist in einem Nicht-Anhebe-Zustand davon, und wobei die Behälterhandhabungsvorrichtung ein Eingriffselement aufweist, das an der Transporteinheit vorgesehen ist und zum In-Eingriff-Stehen mit mindestens einem oberen Behälter eines angehobenen Stapels geeignet ist, um den genannten Behälter wiederzuerlangen oder zum Freigeben eines In-Eingriff-stehenden Behälters, um den genannten Behälter auf das obere Ende eines ausgewählten Stapels zu platzieren.

Die EP 3 995 415 A1 beschreibt ein Lagersystem umfassend eine Lagervorrichtung mit einem Regal, wobei das Regal mindestens zwei Lagen von Artikelplattformen umfasst. Das Lagersystem umfasst außerdem eine Artikeltransportvorrichtung, die so konfiguriert ist, dass sie auf die Artikel auf den Artikelplattformen zugreifen kann. Ein Hubantriebsmechanismus ist an der Lagervorrichtung angeordnet und so konfiguriert, dass er einen Energieanschluss zur Artikeltransportvorrichtung aufweist, um die Artikeltransportvorrichtung im angeschlossenen Zustand entlang des Regals nach oben oder unten zu bewegen. Durch die Anordnung eines Hubantriebsmechanismus an der Speichervorrichtung zum Anheben oder Absenken der Artikeltransportvorrichtung kann die Speichervorrichtung auf die Artikel auf verschiedenen Ebenen zugreifen, was vorteilhaft ist, um den Nutzungsgrad des Raums in der Höhe des Speichersystems zu verbessern und den Höhenraum des Speichersystems voll auszunutzen.

Aufgabe der Erfindung ist es, ein Waren-Lagersystem und ein zugehöriges Verfahren zu schaffen, wodurch wenigstens ein Behälter in einem Lagerschacht eines Waren-Speichers des Waren-Lagersystems auf einfache und zuverlässige Weise automatisch angehoben und/oder abgesenkt werden kann.

Die Aufgabe wird gelöst durch ein Waren-Lagersystem, aufweisend:
- einen Waren-Speicher, der mehrere Lagerschächte aufweist, die in mehreren Reihen und Spalten unmittelbar nebeneinander angeordnet sind, derart, dass jeder Lagerschacht über eine obere Schachtöffnung zugänglich ist zum Entnehmen ein oder mehrerer Behälter aus dem jeweiligen Lagerschacht von oben und/oder zum Einsetzen ein oder mehrerer Behälter in den jeweiligen Lagerschacht von oben, so dass mehrere Behälter in einem vertikalen Stapel innerhalb des jeweiligen Lagerschachtes gelagert werden können,
- eine oberhalb der Lagerschächte angeordnete Fahrebene, welche Führungen aufweist, die ausgebildet sind zum Fahren eines fahrerlosen Fahrzeugs innerhalb der Fahrebene wahlweise in einer ersten Fahrtrichtung, um zwischen mehreren Schachtöffnungen von mehreren in einer Reihe angeordneten Lagerschächten wechseln zu können, und in einer zweiten Fahrtrichtung, um zwischen mehreren Schachtöffnungen von mehreren in einer Spalte angeordneten Lagerschächten wechseln zu können,
- wenigstens ein fahrerloses Fahrzeug, das ausgebildet und eingerichtet ist zum automatischen Fahren in der Fahrebene entlang der Führungen, so dass das fahrerlose Fahrzeug an die Schachtöffnung eines beliebigen Lagerschachtes des Waren-Speichers bewegt werden kann, indem das fahrerlose Fahrzeug wahlweise in der ersten Fahrtrichtung und/oder in der zweiten Fahrtrichtung entlang der Führungen selbstangetrieben fährt,
- mehrere an dem Waren-Speicher angeordnete Hubvorrichtungen, von denen jeweils eine Hubvorrichtung ausgebildet ist zum Anheben und Absenken mindestens eines Stapels von mehreren Behältern, die in einem jeweiligen Lagerschacht gelagert sind, dadurch gekennzeichnet, dass

die mehreren Hubvorrichtungen antriebslos ausgebildet sind und jede Hubvorrichtung oder eine jeweilige Gruppe von mehreren Hubvorrichtungen eine Antriebskupplung aufweist, die ausgebildet ist zum Einspeisen eines Antriebsmoments in die Hubvorrichtung, wobei die Antriebskupplungen von der Fahrebene aus zugänglich sind, und dass
das wenigstens eine fahrerlose Fahrzeug einen Hubantrieb mit einer zu den Antriebskupplungen der Hubvorrichtungen korrespondierenden Antriebsgegenkupplung aufweist, die ausgebildet ist zum automatischen Ankuppeln an eine der Antriebskupplungen der Hubvorrichtungen, wenn sich das fahrerlose Fahrzeug in ankuppelbarer Nähe zu der jeweiligen Antriebskupplung der Hubvorrichtung befindet.

In dem Waren-Speicher des Waren-Lagersystems sind die mehreren Lagerschächte unmittelbar nebeneinander in mehreren Reihen und Spalten angeordnet, so dass zwischen jeweils zwei Reihen oder Spalten von Lagerschächten keine Gassen, beispielsweise für übliche Regalbediengeräte, vorhanden sind. In dem Waren-Speicher können daher die gelagerten Behälter nicht seitlich auf beliebigen Höhenlagen einzeln aus einem Lagerschacht entnommen werden. Vielmehr kann bedingt durch die unmittelbar nebeneinander angeordnete Bauart der Lagerschächte ein Behälter oder mehrere Behälter lediglich über eine Schachtöffnung am oberen Ende des jeweiligen Lagerschachtes entnommen werden. Allenfalls kann es optional noch vorgesehen sein, dass einzelne Behälter an einem unteren Ende des jeweiligen Lagerschachtes entnommen werden können, wenn eine unterste Ebene in dem Waren-Speicher freigehalten wird.

Im Allgemeinen ist es jedoch bei den erfindungsgemäßen Waren-Speichern mit unmittelbar nebeneinander in mehreren Reihen und Spalten angeordneten Lagerschächten vorgesehen, dass ein oder mehrere Behälter über die obere Schachtöffnung entnommen bzw. eingesetzt werden.

Damit Behälter über die oberen Schachtöffnungen der mehreren Lagerschächte entnommen bzw. eingesetzt werden können, ist oberhalb der Lagerschächte eine Fahrebene angeordnet, in welcher ein oder mehrere fahrerlose Fahrzeug fahren können, um automatisch in die Nähe einer gewünschten Schachtöffnung eines gewünschten Lagerschachten gelangen zu können. Das fahrerlose Fahrzeug ist dazu ausgebildet, einen in den Waren-Speicher einzubringenden Behälter an die gewünschte Schachtöffnung eines gewünschten Lagerschachten zu transportieren, damit dieser Behälter in den betreffenden Lagerschacht eingesetzt werden kann. Bei bekannten Waren-Lagersystemen verfügen die fahrerlosen Fahrzeuge über eine Art von Kraneinrichtung, welche einen transportierten Behälter durch ein Abrollen wenigstens eines Seiles am fahrerlosen Fahrzeug in den Lagerschacht absenken kann. In analoger Weise kann ein sich im Lagerschacht befindlicher Behälter durch Aufwickeln des wenigstens einen Seiles innerhalb des Lagerschachtes angehoben werden, um den Behälter über die Schachtöffnung aus dem Lagerschacht entnehmen zu können. Nachteilig ist daran jedoch, dass jeweils nur ein einzelner, jeweils oberster Behälter aus dem Lagerschacht entnommen werden kann.

Bekannt sind auch sehr aufwändige Waren-Lagersysteme, bei denen jeder Lagerschacht über eine eigene Hubvorrichtung und einen eigenen Hubantrieb zum Bewegen der jeweiligen Hubvorrichtung verfügt. Hierbei können zwar ganze Behälterstapel gleichzeitig innerhalb des jeweiligen Lagerschachtes angehoben bzw. abgesenkt werden, allerdings bedarf diese Lösung einer hohen Anzahl von Hubantrieben (ein Hubantrieb je Lagerschacht) und einer aufwändigen Verkabelung der elektrischen Hubantriebe.

Das Waren-Lagersystem umfasst eine obere Fahrebene, welche Führungen aufweist, die ausgebildet sind zum Fahren eines fahrerlosen Fahrzeugs innerhalb der Fahrebene wahlweise in einer ersten Fahrtrichtung, um zwischen mehreren Schachtöffnungen von mehreren in einer Reihe angeordneten Lagerschächten wechseln zu können, und in einer zweiten Fahrtrichtung, um zwischen mehreren Schachtöffnungen von mehreren in einer Spalte angeordneten Lagerschächten wechseln zu können.

Das fahrerlose Fahrzeug kann beispielsweise in einer ersten Fahrtrichtung und in einer zur ersten Fahrrichtung senkrechten zweiten Fahrtrichtung verfahrbar sein, um zwischen mehreren Schachtöffnungen von mehreren in Spalte und Reihen angeordneten Lagerschächten wechseln zu können. In einer abgewandelten Ausführungsform kann das fahrerlose Fahrzeug beispielsweise auch diagonal verfahrbar sein.

Demgemäß fahren ein oder mehrere fahrerlose Fahrzeuge automatisch in der Fahrebene entlang der Führungen, so dass das fahrerlose Fahrzeug an jede beliebige, gewünschte Schachtöffnung eines beliebigen Lagerschachtes des Waren-Speichers bewegt werden kann. Dies dient grundlegend dazu, dass ein Behälter von dem fahrerlosen Fahrzeug an eine gewünschte Schachtöffnung transportiert werden kann, um diesen transportierten Behälter in den Lagerschacht einbringen zu können, oder dass ein Behälter aus einem gewünschten Lagerschacht entnommen und aus dem Waren-Speicher abtransportiert werden kann.

Erfindungsgemäß wird nun vorgeschlagen, dass das wenigstens eine fahrerlose Fahrzeug einen Hubantrieb aufweist und an dem Waren-Speicher selbst keine stationären Hubantriebe vorhanden sind.

An den Lagerschächten sind zwar weiterhin mehrere an dem Waren-Speicher angeordnete passive, d.h. unangetriebene Hubvorrichtungen vorgesehen, von denen jeweils eine Hubvorrichtung ausgebildet ist zum Anheben und Absenken mindestens eines Stapels von mehreren Behältern, die in einem jeweiligen Lagerschacht gelagert sind. Allerdings sind die mehreren Hubvorrichtungen antriebslos ausgebildet.

Erfindungsgemäß weist jedoch jede Hubvorrichtung oder jede Gruppe von mehreren Hubvorrichtungen eine Antriebskupplung auf, die ausgebildet ist zum Einspeisen eines Antriebsmoments in die Hubvorrichtung, wobei die Antriebskupplungen von der Fahrebene aus zugänglich sind.

Das wenigstens eine fahrerlose Fahrzeug weist eine zu den Antriebskupplungen der Hubvorrichtungen korrespondierende Antriebsgegenkupplung auf, die ausgebildet ist zum automatischen Ankuppeln an eine der Antriebskupplungen der stationären Hubvorrichtungen, wenn sich das fahrerlose Fahrzeug in ankuppelbarer Nähe zu der jeweiligen Antriebskupplung der Hubvorrichtung befindet. Ein Anheben oder Absenken von Behältern innerhalb eines Lagerschachtes mittels der Hubvorrichtung ist nämlich grundsätzlich nur dann sinnvoll, wenn sich auch ein fahrerloses Fahrzeug in der Nähe der Schachtöffnung des betreffenden Lagerschachtes befindet, damit wenigstens ein betreffende Behälter übergeben werden kann. So wird ein Hubantrieb nur dort benötigt, wo sich auch ein fahrerloses Fahrzeug befindet. Da das fahrerlose Fahrzeug bereits ein Fahrwerk mit Fahrantrieben aufweist und die Fahrantriebe des fahrerlosen Fahrzeugs sowieso mit Antriebsenergie versorgt sein müssen, kann dieselbe Infrastruktur zur Bereitstellung der Antriebsenergie für die Fahrantriebe auch genutzt werden als Antriebsenergie für den vom fahrerlosen Fahrzeug mitgeführten Hubantrieb.

Die Antriebsenergie kann vorzugsweise elektrische Energie sein und der vom fahrerlosen Fahrzeug mitgeführte Hubantrieb kann ein elektrischer Hubantrieb sein.

Die elektrische Antriebsenergie kann beispielsweise in einem vom fahrerlosen Fahrzeug mitgeführten Speicher für elektrische Energie, wie beispielsweise einer Antriebsbatterie vorgehalten sein. Alternativ kann vorgesehen sein, dass das fahrerlose Fahrzeug einen elektrischen Gegensteckverbinder aufweist, der an einen stationären Steckverbinder elektrisch kontaktierbar ist, um elektrische Energie auf das fahrerlose Fahrzeug drahtgebunden übertragen zu können. Gegebenenfalls ist auch eine drahtlose Übertragung von elektrische Energie auf das fahrerlose Fahrzeug möglich, beispielsweise über Induktionsvorrichtungen.

Die Antriebsgegenkupplung kann an dem fahrerlosen Fahrzeug mittels einer Stelleinrichtung zwischen einer Kopplungsstellung, in welcher die Antriebsgegenkupplung mit der Antriebskupplung einer Hubvorrichtung in Eingriff steht, wenn sich das fahrerlose Fahrzeug in ankuppelbarer Nähe zu der jeweiligen Antriebskupplung der Hubvorrichtung befindet, und einer Freigabestellung, in welcher die Antriebsgegenkupplung von der Antriebskupplung der Hubvorrichtung getrennt ist, automatisch verstellbar gelagert sein.

In der Kopplungsstellung, in der die Antriebsgegenkupplung mit der Antriebskupplung der Hubvorrichtungen in Eingriff steht, kann ein von dem Hubantrieb des fahrerlosen Fahrzeugs erzeugtes Antriebsdrehmoment auf die stationäre Hubvorrichtung des Lagerschachtes in dem Waren-Speicher übertragen werden. Durch den von dem fahrerlosen Fahrzeug angesteuerten Hubantrieb wird die Hubvorrichtung des gewünschten Lagerschachtes angesteuert, um einen Behälter oder einen Stapel von mehreren Behältern innerhalb des Lagerschachtes anzuheben oder abzusenken.

Die Antriebsgegenkupplung kann beispielsweise ein Antriebsprofil aufweisen, wie es zum Antreiben von Schraubenköpfen allgemein bekannt ist. So kann die Antriebsgegenkupplung beispielsweise in Art eines Innensechskantprofils ausgebildet sein, wobei die Antriebskupplung der Hubvorrichtung demgemäß ein Außensechskantprofil aufweisen kann.

Die Stelleinrichtung kann beispielsweise einen Hebel, ein Gelenkgetriebe und/oder einen linearen Antrieb aufweisen, durch den zumindest die Antriebsgegenkupplung in einer axialen Richtung zu Ihrer Drehachse angehoben und/oder abgesenkt werden kann. Die Stelleinrichtung kann auch ausgebildet sind den Hubantrieb zusammen mit der Antriebsgegenkupplung anzuheben und/oder abzusenken. So kann der Hubantrieb beispielsweise einen elektrischen Motor umfassen, der eine Motorwelle aufweist, auf der die Antriebsgegenkupplung befestigt ist. Gegebenenfalls kann der elektrische Motor als solches feststehend an dem fahrerlosen Fahrzeug montiert sein und lediglich die Motorwelle zusammen mit der Antriebsgegenkupplung kann in einer axialen Richtung höhenverstellbar gelagert sein.

Das fahrerlose Fahrzeug kann demgemäß einen elektrischen Energiespeicher und einen an den elektrischen Energiespeicher angeschlossenen Hubantrieb aufweisen, der als elektrischer Motor ausgebildet ist, an dessen Motorwelle die Antriebsgegenkupplung angeschlossen ist.

Das Waren-Lagersystem kann wenigstens eine am Waren-Speicher angeordnete Ladestation umfassen, die ausgebildet und eingerichtet ist zum Aufladen des elektrischen Energiespeichers des fahrerlosen Fahrzeugs, wobei die Ladestation einen elektrischen Steckverbinder aufweist, über den elektrische Energie aus der Ladestation abgegeben werden kann, und das fahrerlose Fahrzeug einen zum elektrischen Steckverbinder der Ladestation korrespondierenden elektrischen Gegensteckverbinder aufweist, wobei der elektrische Gegensteckverbinder des fahrerlosen Fahrzeugs an den elektrischen Steckverbinder der Ladestation elektrisch ankoppelbar ist, wenn sich das fahrerlose Fahrzeug in ankuppelbarer Nähe zu der jeweiligen Antriebskupplung der Hubvorrichtung befindet.

Der elektrische Motor des Hubantriebs kann ausgebildet und eingerichtet sein, in einem an den elektrischen Steckverbinder der Ladestation angekoppelten Zustand des elektrischen Gegensteckverbinders des fahrerlosen Fahrzeugs elektrische Energie direkt aus einem elektrischen Netz zu beziehen, an das die Ladestation angeschlossen ist. In diesem Fall kann vorgesehen sein, dass die elektrische Energie für das Fahren mittels der Fahrantriebe weiterhin aus dem elektrischen Energiespeicher des Fahrzeugs bezogen wird.

Wenn der Hubantrieb des fahrerlosen Fahrzeugs mittels seiner Antriebsgegenkupplung an die Antriebskupplung einer Hubvorrichtung angeschlossen ist, steht das fahrerlose Fahrzeug still, d.h. das fahrerlose Fahrzeug fährt nicht. Demgemäß ist es während eines solchen Stillstands des fahrerlosen Fahrzeugs nicht nötig, dass elektrische Energie aus dem elektrischen Energiespeicher des fahrerlosen Fahrzeugs entnommen wird. Vielmehr kann das stillstehende fahrerlose Fahrzeug mittels seines Gegensteckverbinders an einen stationären elektrischen Steckverbinder angeschlossen werden, so dass über die elektrische Kontaktierung von Gegensteckverbinder und Steckverbinder die elektrische Energie von außerhalb des fahrerlosen Fahrzeugs, insbesondere aus einem elektrischen Netz bezogen werden kann. Während einer Versorgung des Hubantriebs mit elektrischer Energie aus einem Netz, um eine der Hubvorrichtungen anzutreiben, kann parallel dazu gegebenenfalls auch der elektrische Energiespeicher des fahrerlosen Fahrzeugs, insbesondere eine Antriebsbatterie des fahrerlosen Fahrzeugs mit elektrischer Energie aufgeladen werden.

Die jeweilige Antriebskupplung der Hubvorrichtung kann an eine Hubspindel angeschlossen sein, die sich entlang der Höhe wenigstens eines Lagerschachtes erstreckt, wobei an der Hubspindel eine sich in den Lagerschacht erstreckende Plattform zum Abstellen von Behältern höhenverstellbar gelagert ist, derart, dass durch ein Antreiben der Hubspindel über die Antriebskupplung hinweg, die Plattform innerhalb des Lagerschachtes angehoben werden kann, um die auf der Plattform in einem Stapel abgestellten Behälter über die Schachtöffnung hinweg nach oben aus dem Lagerschacht herausheben zu können, und/oder abgesenkt werden kann, um die auf der Plattform in einem Stapel abgestellten Behälter in die Schachtöffnung hinein nach unten in den Lagerschacht hinein absenken zu können.

Jeder Lagerschacht kann eine eigene Hubvorrichtung aufweisen. Alternativ können zwei Lagerschächte oder eine Gruppe von mehreren Lagerschächten auch eine gemeinsame Hubvorrichtung umfassen. Im Falle einer gemeinsamen Hubvorrichtung können mehrere Behälter in verschiedenen Lagerschächten mittels eines einzigen Hubantriebs gemeinsam angehoben und/oder abgesenkt werden.

Eine Hubvorrichtung kann wenigstens eine Hubspindel aufweisen. Die Hubspindel kann sich über die gesamte Höhe des Lagerschachtes oder zumindest im Wesentlichen über die wesentliche Höhe des Lagerschachtes erstrecken. Je Lagerschacht kann eine einzige Hubspindel vorgesehen sein. Alternativ können je Lagerschacht zwei oder mehr Hubspindeln vorgesehen sein. Wenn der Lagerschacht nur eine einzige Hubspindel aufweist, kann die Hubvorrichtung zusätzlich Führungen, wie beispielsweise stationäre Stangen, aufweisen, die sich parallel zur Hubspindel über die wesentliche Höhe des Lagerschachtes erstrecken. Eine höhenverstellbare Plattform ist an die wenigstens eine Hubspindel angekoppelt, so dass durch ein Antreiben der Hubspindel über die Antriebskupplung hinweg, die Plattform innerhalb des Lagerschachtes angehoben werden kann, um die auf der Plattform in einem Stapel abgestellten Behälter über die Schachtöffnung hinweg nach oben aus dem Lagerschacht herausheben zu können, und/oder abgesenkt werden kann, um die auf der Plattform in einem Stapel abgestellten Behälter in die Schachtöffnung hinein nach unten in den Lagerschacht hinein absenken zu können. Die Plattform kann gegebenenfalls auch an den optional vorhandenen Führungen oder Stangen höhenverstellbar geführt sein.

Die Antriebskupplung kann in einer einfachen Ausführung durch ein entsprechendes Antriebsprofil gebildet werden, das an einem oberen Endabschnitt der Hubspindel ausgebildet ist. Die Antriebskupplung kann insoweit einteilig mit der Hubspindel ausgebildet sein.

Die Plattform kann wenigstens ein Durchgangsloch aufweisen, das mit einem Innengewindespindelgang versehen ist. Die Hubspindel trägt einen Außengewindespindelgang, der in den Innengewindespindelgang des Durchgangsloches eingreift, durch das die Hubspindel hindurchgeführt ist. Durch Drehen der Hubspindel in die eine Drehrichtung wird demgemäß die Plattform angehoben und durch Drehen der Hubspindel in die entgegengesetzte Drehrichtung wird demgemäß die Plattform abgesenkt. Ein oder mehrere Behälter, die innerhalb des Lagerschachtes auf der Plattform abgestellt sind, können durch das Anheben oder Absenken der Plattform mit angehoben und/oder abgesenkt werden. Die Plattform erstreckt sich insoweit quer über den Querschnitt des Lagerschachtes hinweg. Die Plattform kann beispielsweise eine von einer geschlossenflächigen Platte, einem Gitter oder beispielsweise von gabelartigen einzelnen Zinken gebildet werden.

Die jeweilige Antriebskupplung der Hubvorrichtung kann an eine Hubspindel angeschlossen sein, die sich entlang der Höhe wenigstens eines Lagerschachtes erstreckt, wobei an dem Lagerschacht sich jeweils wenigstens eine Hilfshubspindel erstreckt, welche zusammen mit der Hubspindel antreibbar ist, wobei die Hubspindel und die Hilfshubspindel dem Stapel an Behältern im Lagerschacht gegenüberliegend angeordnet sind und jeweils ein Spindelgewinde aufweisen, das ausgebildet ist zum Eingreifen von Tragabschnitten an seitlichen Randbereichen der Behälter, derart, dass in die Spindelgewinde der Hubspindel und der Hilfshubspindel eingreifende Behälter durch ein Drehen von Hubspindel und Hilfshubspindel einzeltragend angehoben und/oder abgesenkt werden können. Bei einem solchen Stapel kann es vorgesehen sein, dass zwei unmittelbar übereinander angeordnete Behälter nicht direkt aufeinander aufsitzen, sondern geringfügig voneinander beabstandet sind, da sich jeder Behälter eigenständig an der Hubspindel und der Hilfshubspindel abstützt. Im Rahmen der Erfinder wird bei solchen beabstandeten Anordnungen von Stapeln dennoch von einem Stapel gesprochen, in dem Sinne, dass die mehreren Behälter innerhalb eines einzelnen Lagerschachtes übereinander angeordnet sind.

Jeder Behälter kann insoweit an zwei gegenüberliegenden Seiten jeweils einen Tragabschnitt aufweisen. Der jeweilige Tragabschnitt kann einteilig mit dem Behälter ausgebildet sein. Der Behälter kann beispielsweise aus Kunststoff hergestellt sein.

Jeder Tragabschnitt kann beispielsweise einen leistenartigen Vorsprung aufweisen, der an der Seitenwand des Behälters in einer schrägen Orientierung angeordnet ist, die dem Steigungswinkel des jeweiligen Spindelgewindes der Hubspindel und der Hilfshubspindel entspricht. Die Tragabschnitte des Behälters greifen in dieser Ausführungsform insoweit in die Spindelgewindegänge der Hubspindel und der Hilfshubspindel ein. So ist jeder Behälter in einer bestimmten Höhenlage an der Hubspindel und der Hilfshubspindel aufgehängt. Durch Drehen der Hubspindel und der Hilfshubspindel wandern die in die Spindelgewindegänge eingreifenden Tragabschnitt je nach Drehrichtung wahlweise nach oben oder nach unten, so dass sich der eingehängte Behälter im Lagerschacht entsprechend anhebt oder absenkt.

Die Tragabschnitte der Behälter können gegebenenfalls verstellbar sein, so dass diese wahlweise mit der Hubspindel und der Hilfshubspindel in Eingriff zu bringen sind, so dass der betreffende Behälter durch ein Drehen der Hubspindel und der Hilfshubspindel angehoben und/oder abgesenkt werden kann, oder die Tragabschnitte der Behälter können außer Eingriff gebracht werden, so dass ein solcher Behälter bei einem Drehen der Hubspindel und der Hilfshubspindel nicht mitbewegt wird.

Die Hubspindeln und die Hilfshubspindeln können in einer vertikalen Höhe über dem Boden des Waren-Speichers enden, welche mindestens so hoch ist, wie die Höhe eines Behälters, so dass die von den Hubspindeln und den Hilfshubspindeln geführten Behälter in einer bodennahen Höhenposition aus dem Eingriff mit den Spindelgewinden der Hubspindeln und Hilfshubspindeln entlassen werden können, um einen jeweiligen von den Hubspindeln und Hilfshubspindeln gelösten Behälter in einer unteren Ebene aus dem Waren-Speicher ausschleusen zu können.

In dieser Ausführungsform erstrecken sich die Hubspindeln und die Hilfshubspindeln somit nicht in die unterste Ebene des Waren-Speichers. Nach unten entlassene Behälter können in der unteren Ebene gegebenenfalls von bodengebundenen Fahrzeugen oder beispielsweise mittels aktiven oder passiven Fördereinrichtungen, wie Rollenbahnen oder Förderbändern, aus dem Waren-Speicher heraustransportiert werden. In analoger Weise kann ein in den Waren-Speicher einzubringender Behälter durch das bodengebundene Fahrzeug innerhalb der untersten Ebene unterhalb der Lagerschächte an die Unterseite eines bestimmten Lagerschachtes automatisch transportiert werden. Ist der Behälter unter dem ausgewählten Lagerschacht angekommen, kann der Behälter beispielsweise durch eine Hebeeinrichtung von unten in den Lagerschacht eingehoben werden und dort von der Hubspindel und der Hilfshubspindel aufgenommen werden, so dass der aufgenommene Behälter innerhalb des Lagerschachtes mittels der Hubvorrichtung automatisch angehoben und auch wieder abgesenkt werden kann.

Jeder Lagerschacht kann einen zumindest im Wesentlichen rechteckigen Querschnitt aufweisen, jeweils zwei oder vier Lagerschächte können mit ihren Schachtöffnungen ein Quadrant auf der Fahrebene bilden, wobei den jeweils zwei oder vier Lagerschächten zugeordnete jeweilige zwei oder vier Hubspindeln zentrumsnah des Quadranten angeordnet sind, derart, dass in einer Ansicht von oben der im ersten Quadranten angeordnete Lagerschacht seine erste Hubspindel in der linken unteren Ecke aufweist, der im zweiten Quadranten angeordnete Lagerschacht seine zweite Hubspindel in der rechten unteren Ecke aufweist, der im dritten Quadranten angeordnete Lagerschacht seine dritte Hubspindel in der rechten oberen Ecke aufweist und/oder der im vierten Quadranten angeordnete Lagerschacht seine vierte Hubspindel in der linken oberen Ecke aufweist.

Dies bedeutet, dass eine Gruppe von vier unmittelbar benachbarten Lagerschächten ihre jeweiligen Hubspindeln zentrumsnah angeordnet haben können. Dies hat den Vorteil, dass ein fahrerloses Fahrzeug aus einer bestimmten Position in der Fahrebene heraus wahlweise eine der vier Hubspindeln mittels des Hubantriebs des fahrerlosen Fahrzeugs antreiben kann, ohne dass das fahrerlose Fahrzeug seine momentane Fahrzeugposition verlassen bzw. ändern müsste. Gegebenenfalls kann das fahrerlose Fahrzeug auch mehr als nur einen einzigen Hubantrieb aufweisen, so dass in einer solchen Ausführung gegebenenfalls zwei, drei oder vier Hubspindeln der vier verschiedenen Lagerschächte gleichzeitig bewegt werden können. So können in bis zu vier Lagerschächte Behälter gleichzeitig angehoben oder abgesenkt werden. Selbstverständlich kann dabei auch vorgesehen sein, dass beispielsweise ein Behälter oder eine Gruppe von Behältern in einem ersten Lagerschacht angehoben werden, wo hingegen ein Behälter oder eine Gruppe von Behältern in einem zweiten Lagerschacht, der von den ersten Lagerschacht verschieden ist, zur selben Zeit abgesenkt werden.

Das fahrerlose Fahrzeug kann wenigstens einen Tragarm aufweisen, der ausgebildet ist zum Aufnehmen wenigstens eines Behälters oder eines Stapels von mehreren Behältern gleichzeitig, um diese gemeinsam innerhalb der Fahrebene transportieren zu können.

In einer ersten Ausführungsvariante kann sich der Tragarm von einem quaderförmigen Grundgehäuse des fahrerlosen Fahrzeugs seitlich wegerstrecken, so dass ein Behälter aus einem Lagerschacht entnommen werden kann oder in diesen Lagerschacht eingesetzt werden kann, der unmittelbar neben demjenigen Lagerschacht angeordnet ist, über dem sich das fahrerlose Fahrzeug befindet.

In einer zweiten Ausführungsvariante kann das fahrerlose Fahrzeug eine rahmenartige Struktur aufweisen, die im Zentrum eine Durchtrittsöffnung aufweist, über die Behälter durch die rahmenartige Struktur des fahrerlosen Fahrzeugs hindurch aus dem Lagerschacht entnommen werden können und/oder Behälter in den Lagerschacht eingesetzt werden können. Ein Tragarm kann sich in einer solchen Ausführungsvariante demgemäß nach innen erstrecken, ausgehend von der rahmenartige Außenstruktur in Richtung des Zentrums in die Durchtrittsöffnung hinein, so dass der Tragarm einen Behälter oder einen Stapel von mehreren Behältern zentral über diejenige Schachtöffnung platzieren kann, über der sich momentan auch das fahrerlose Fahrzeug befindet.

Die Aufgabe wird auch gelöst durch ein Verfahren zum Anheben und/oder Absenken wenigstens eines Behälters oder eines Stapels von mehreren Behältern innerhalb eines Lagerschachtes in einem Waren-Speicher eines Waren-Lagersystems wie beschrieben, aufweisend die Schritte:
- automatisches Fahren eines fahrerlosen Fahrzeugs, das ausgebildet und eingerichtet ist zum automatischen Fahren in einer Fahrebene oberhalb von Lagerschächten des Waren-Speichers entlang von Führungen in der Fahrebene, so dass das fahrerlose Fahrzeug an eine obere Schachtöffnung eines beliebigen Lagerschachtes des Waren-Speichers bewegt werden kann, indem das fahrerlose Fahrzeug wahlweise in der ersten Fahrtrichtung und/oder in der zweiten Fahrtrichtung entlang der Führungen selbstangetrieben gefahren wird,
- automatisches Ankoppeln einer Antriebsgegenkupplung des fahrerlosen Fahrzeugs, die von einem Hubantrieb des fahrerlosen Fahrzeugs antreibbar ist, an eine Antriebskupplung einer stationär in dem betreffenden Lagerschacht angeordneten Hubvorrichtung des Waren-Speichers, derart, dass ein Drehmoment von dem Hubantrieb des fahrerlosen Fahrzeugs auf die Hubvorrichtung des Waren-Speichers übertragen werden kann, um einen im Lagerschacht vorhandenen Behälter oder einen im Lagerschacht vorhandenen Stapel von mehreren Behältern mittels der Hubvorrichtung wahlweise anheben oder absenken zu können,
- automatisches Antreiben des Hubantriebs des fahrerlosen Fahrzeugs, um den im Lagerschacht vorhandenen Behälter oder den im Lagerschacht vorhandenen Stapel von mehreren Behältern mittels der Hubvorrichtung anzuheben oder abzusenken.

Bei einem solchen Stapel kann es auch im Rahmen des Verfahrens vorgesehen sein, dass zwei unmittelbar übereinander angeordnete Behälter nicht direkt aufeinander aufsitzen, sondern geringfügig voneinander beabstandet sind, da sich jeder Behälter eigenständig an der Hubspindel und der Hilfshubspindel abstützt. Im Rahmen der Erfinder wird bei solchen beabstandeten Anordnungen von Stapeln dennoch von einem Stapel gesprochen, in dem Sinne, dass die mehreren Behälter innerhalb eines einzelnen Lagerschachtes übereinander angeordnet sind.

Das Verfahren kann den weiteren Schritt aufweisen, wonach ein automatisches Entnehmen von elektrischer Energie aus einer stationären Ladestation des Waren-Speichers in einen elektrischen Energiespeicher des fahrerlosen Fahrzeugs und/oder in den Hubantrieb des fahrerlosen Fahrzeugs erfolgt, während der Hubantrieb des fahrerlosen Fahrzeugs die Hubvorrichtung des Waren-Speichers zum Anheben oder Absenken eines im Lagerschacht vorhandenen Behälters oder des im Lagerschacht vorhandenen Stapels von mehreren Behältern antreibt.

Konkrete Ausführungsbeispiele der Erfindung sind in der nachfolgenden Beschreibung unter Bezugnahme auf die beigefügten Figuren näher erläutert.

Es zeigen:
- Fig. 1: eine schematische Darstellung eines Ausschnitts eines beispielhaften erfindungsgemäßen Waren-Lagersystem mit Hubvorrichtungen in Form von Hubspindeln und einem fahrerlosen Fahrzeug mit einem auskragenden Tragarm für Behälter,
- Fig. 2: eine schematische Darstellung eines Ausschnitts eines beispielhaften erfindungsgemäßen Waren-Lagersystem mit Hubvorrichtungen in Form von Hubspindeln und einem fahrerlosen Fahrzeug mit rahmenartiger Außenstruktur,
- Fig. 3: eine schematische Darstellung eines Ausschnitts eines beispielhaften erfindungsgemäßen Waren-Lagersystem einer zweiten Ausführungsform mit Hubvorrichtungen in Form von Hubspindeln und Hilfshubspindeln, an welchen Behälter unmittelbar gehalten sind,
- Fig. 4: eine Seitenansicht eines Ausschnitts eines beispielhaften erfindungsgemäßen Waren-Lagersystem einer dritten Ausführungsform mit mehreren Hubvorrichtungen in einem gemeinsamen Eckebereich einer Gruppe von vier Lagerschächten,
- Fig. 5: eine Ansicht von oben auf die dritte Ausführungsform des Waren-Lagersystems gemäß Fig. 4, und
- Fig. 6: ein Flussdiagramm der Schritte in dem grundlegenden erfindungsgemäßen Verfahren.

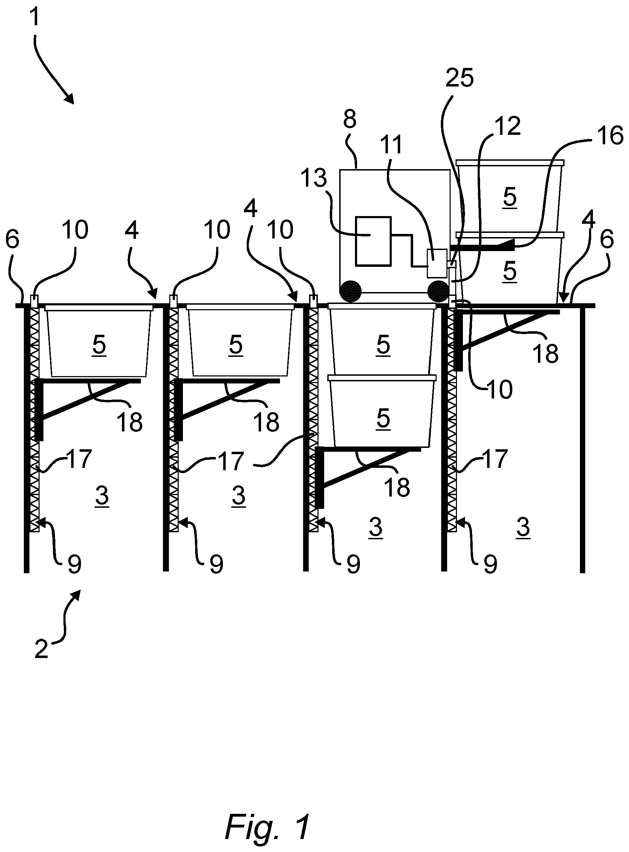

In der Fig. 1 ist ein beispielhaftes Waren-Lagersystem 1 schematisch dargestellt.

Das Waren-Lagersystem 1 weist einen Waren-Speicher 2 auf, der mehrere Lagerschächte 3 umfasst, die in mehreren Reihen und Spalten unmittelbar nebeneinander angeordnet sind, derart, dass jeder Lagerschacht 3 über eine obere Schachtöffnung 4 zugänglich ist zum Entnehmen ein oder mehrerer Behälter 5 aus dem jeweiligen Lagerschacht 3 von oben und/oder zum Einsetzen ein oder mehrerer Behälter 5 in den jeweiligen Lagerschacht 3 von oben, so dass mehrere Behälter 5 in einem vertikalen Stapel innerhalb des jeweiligen Lagerschachtes gelagert werden können.

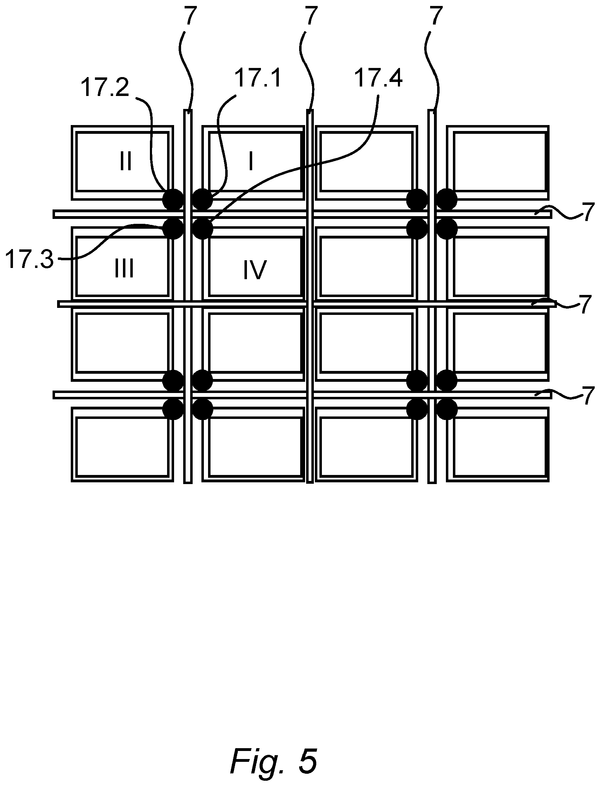

Das Waren-Lagersystem 1 umfasst eine oberhalb der Lagerschächte 3 angeordnete Fahrebene 6, welche Führungen 7 (Fig. 5) aufweist, die ausgebildet sind zum Fahren eines fahrerlosen Fahrzeugs 8 innerhalb der Fahrebene 6 wahlweise in einer ersten Fahrtrichtung, um zwischen mehreren Schachtöffnungen 4 von mehreren in einer Reihe angeordneten Lagerschächten 3 wechseln zu können, und in einer zweiten Fahrtrichtung, um zwischen mehreren Schachtöffnungen 4 von mehreren in einer Spalte angeordneten Lagerschächten 3 wechseln zu können.

Das Waren-Lagersystem 1 weist demgemäß wenigstens ein fahrerloses Fahrzeug 8 auf, das ausgebildet und eingerichtet ist zum automatischen Fahren in der Fahrebene 6 entlang der Führungen 7, so dass das fahrerlose Fahrzeug 8 an die Schachtöffnung 4 eines beliebigen Lagerschachtes 2 des Waren-Speichers 2 bewegt werden kann, indem das fahrerlose Fahrzeug 8 wahlweise in der ersten Fahrtrichtung und/oder in der zweiten Fahrtrichtung entlang der Führungen 7 selbstangetrieben fährt.

Das Waren-Lagersystem 1 umfasst mehrere an dem Waren-Speicher 2 angeordnete Hubvorrichtungen 9, von denen jeweils eine Hubvorrichtung 9 ausgebildet ist zum Anheben und Absenken mindestens eines Stapels von mehreren Behältern 5, die in einem jeweiligen Lagerschacht 3 gelagert sind.

Die mehreren Hubvorrichtungen 9 sind antriebslos ausgebildet und jede Hubvorrichtung 9 oder eine jeweilige Gruppe von mehreren Hubvorrichtungen 9 weist eine Antriebskupplung 10 auf, die ausgebildet ist zum Einspeisen eines Antriebsmoments in die Hubvorrichtung 9, wobei die Antriebskupplungen 10 von der Fahrebene 6 aus zugänglich sind.

Erfindungsgemäß weist das wenigstens eine fahrerlose Fahrzeug 8 einen Hubantrieb 11 mit einer zu den Antriebskupplungen 10 der Hubvorrichtungen 9 korrespondierenden Antriebsgegenkupplung 12 auf, die ausgebildet ist zum automatischen Ankuppeln an eine der Antriebskupplungen 10 der Hubvorrichtungen 9, wenn sich das fahrerlose Fahrzeug 8 in ankuppelbarer Nähe zu der jeweiligen Antriebskupplung 10 der Hubvorrichtung 9 befindet.

Die Antriebsgegenkupplung 12 ist im Falle des vorliegenden Ausführungsbeispiels an dem fahrerlosen Fahrzeug 8 mittels einer Stelleinrichtung 25 zwischen einer Kopplungsstellung, in welcher die Antriebsgegenkupplung 12 mit der Antriebskupplung 10 einer Hubvorrichtung 9 in Eingriff steht, wenn sich das fahrerlose Fahrzeug 8 in ankuppelbarer Nähe zu der jeweiligen Antriebskupplung 10 der Hubvorrichtung 9 befindet, und einer Freigabestellung, in welcher die Antriebsgegenkupplung 12 von der Antriebskupplung 10 der Hubvorrichtung 9 getrennt ist, automatisch verstellbar gelagert ist.

Das fahrerlose Fahrzeug 8 weist im Falle der vorliegenden Ausführungsbeispiele einen elektrischen Energiespeicher 13 auf. Der Hubantrieb 11 ist als elektrischer Motor ausgebildet, an dessen Motorwelle die Antriebsgegenkupplung 12 angeschlossen ist, wobei der Hubantrieb 11, d.h. der elektrische Motor an den elektrischen Energiespeicher 12 angeschlossen ist.

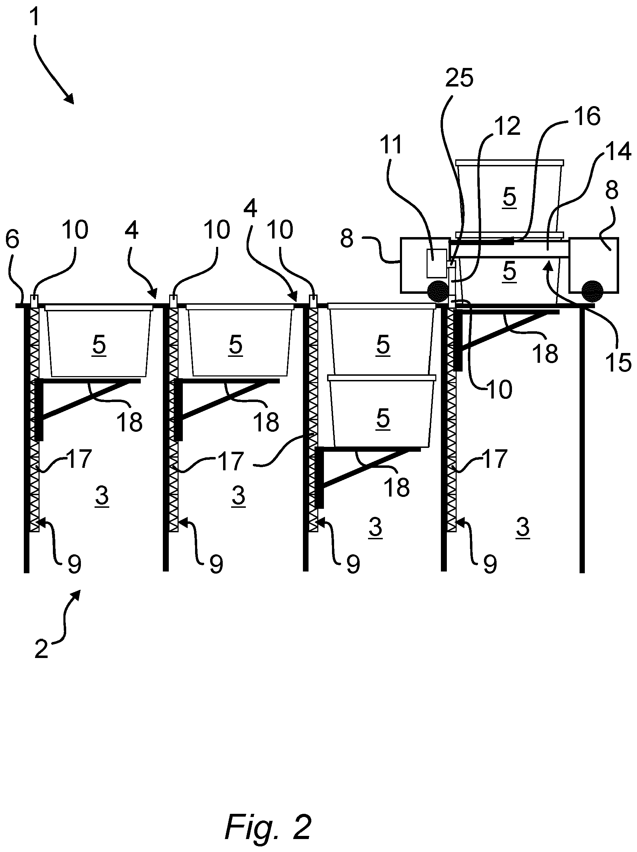

In einer Ausführungsvariante gemäß Fig. 2 kann das fahrerlose Fahrzeug 8 eine rahmenartige Struktur 14 aufweisen, die im Zentrum eine Durchtrittsöffnung 15 aufweist, über die Behälter 5 durch die rahmenartige Struktur 14 des fahrerlosen Fahrzeugs 8 hindurch aus dem Lagerschacht 3 entnommen werden können und/oder Behälter 5 in den Lagerschacht 3 eingesetzt werden können. Ein Tragarm 16 kann sich in einer solchen Ausführungsvariante demgemäß nach innen erstrecken, ausgehend von der rahmenartige Außenstruktur 14 in Richtung des Zentrums in die Durchtrittsöffnung 15 hinein, so dass der Tragarm 16 einen Behälter 5 oder einen Stapel von mehreren Behältern 5 zentral über diejenige Schachtöffnung 4 platzieren kann, über der sich momentan auch das fahrerlose Fahrzeug 8 befindet.

In den Ausführungen gemäß Fig. 1 und Fig. 2 ist die jeweilige Antriebskupplung 10 der Hubvorrichtung 9 an eine Hubspindel 17 angeschlossen ist, die sich entlang der Höhe wenigstens eines Lagerschachtes 3 erstreckt, wobei an der Hubspindel 17 eine sich in den Lagerschacht 3 erstreckende Plattform 18 zum Abstellen von Behältern 5 höhenverstellbar gelagert ist, derart, dass durch ein Antreiben der Hubspindel 17 über die Antriebskupplung 10 hinweg, die Plattform 18 innerhalb des Lagerschachtes 3 angehoben werden kann, um die auf der Plattform 18 in einem Stapel abgestellten Behälter 5 über die Schachtöffnung 4 hinweg nach oben aus dem Lagerschacht 3 herausheben zu können, und/oder abgesenkt werden kann, um die auf der Plattform 18 in einem Stapel abgestellten Behälter 5 in die Schachtöffnung 4 hinein nach unten in den Lagerschacht 3 hinein absenken zu können.

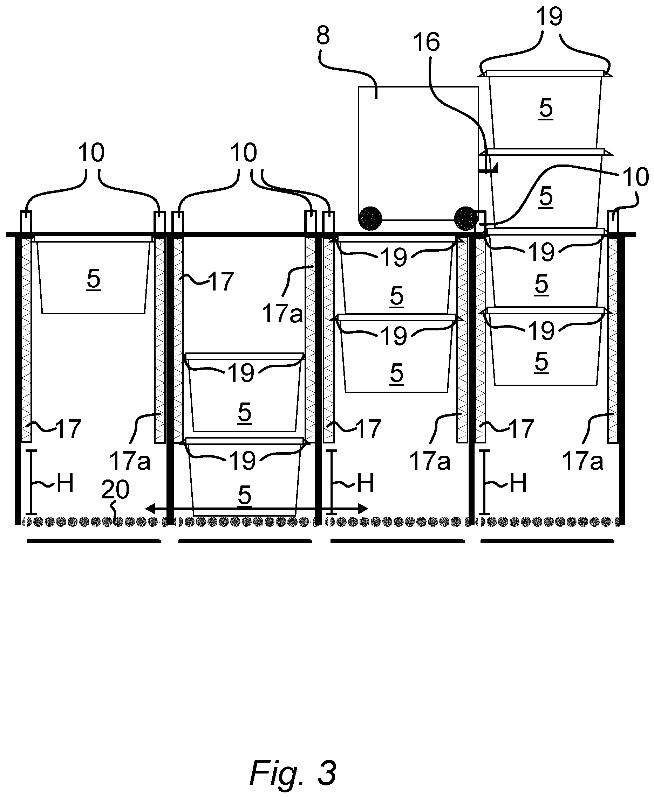

Die Fig. 3 zeigt ein abgewandeltes Ausführungsbeispiel bei dem die jeweilige Antriebskupplung 10 der Hubvorrichtung 9 an eine Hubspindel 17 angeschlossen ist, die sich entlang der Höhe wenigstens eines Lagerschachtes 3 erstreckt, wobei an dem Lagerschacht 3 sich außerdem jeweils wenigstens eine Hilfshubspindel 17a erstreckt, welche zusammen mit der Hubspindel 17 antreibbar ist, wobei die Hubspindel 17 und die Hilfshubspindel 17a dem Stapel an Behältern 5 im Lagerschacht 3 gegenüberliegend angeordnet sind und jeweils ein Spindelgewinde aufweisen, das ausgebildet ist zum Eingreifen von Tragabschnitten 19 an seitlichen Randbereichen der Behälter 5, derart, dass in die Spindelgewinde der Hubspindel 17 und der Hilfshubspindel 17a eingreifende Behälter 5 durch ein Drehen von Hubspindel 17 und Hilfshubspindel 17a einzeltragend angehoben und/oder abgesenkt werden können.

Im Falle des dargestellten Ausführungsbeispiels der Fig. 3 enden die Hubspindeln 17 und die Hilfshubspindeln 17a in einer vertikalen Höhe H über dem Boden 20 des Waren-Speichers 2, welche mindestens so hoch ist, wie die Höhe eines Behälters 5, so dass die von den Hubspindeln 17 und den Hilfshubspindeln 17a geführten Behälter 5 in einer bodennahen Höhenposition aus dem Eingriff mit den Spindelgewinden der Hubspindeln 17 und Hilfshubspindeln 17a entlassen werden können, um einen jeweiligen von den Hubspindeln 17 und Hilfshubspindeln 17a gelösten Behälter 5 in einer unteren Ebene aus dem Waren-Speicher 2 ausschleusen zu können.

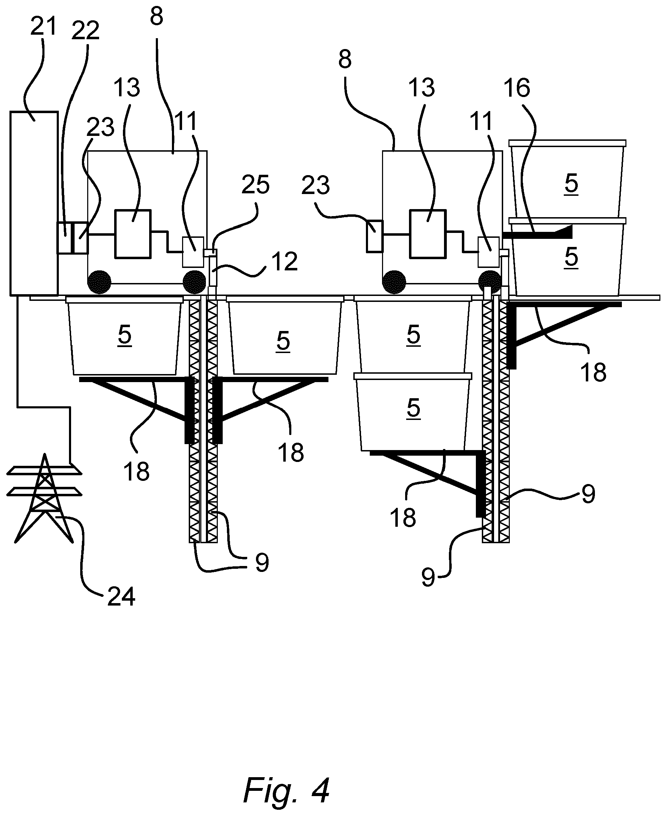

Wie in Fig. 4 schematisch aufgezeigt ist, kann das Waren-Lagersystem 1 wenigstens eine am Waren-Speicher 2 angeordnete Ladestation 21 aufweisen, die ausgebildet und eingerichtet ist zum Aufladen des elektrischen Energiespeichers 13 des fahrerlosen Fahrzeugs 8, im Falle der Fig. 4 das links dargestellte Fahrzeug 8, wobei die Ladestation 21 einen elektrischen Steckverbinder 22 aufweist, über den elektrische Energie aus der Ladestation 21 abgegeben werden kann, und das fahrerlose Fahrzeug 8 einen zum elektrischen Steckverbinder 22 der Ladestation 21 korrespondierenden elektrischen Gegensteckverbinder 23 aufweist, wobei der elektrische Gegensteckverbinder 23 des fahrerlosen Fahrzeugs 8 an den elektrischen Steckverbinder 22 der Ladestation 21 elektrisch ankoppelbar ist, wenn sich das fahrerlose Fahrzeug 8 in ankuppelbarer Nähe zu der jeweiligen Antriebskupplung 10 der Hubvorrichtung 9 befindet, wie dies durch das in Fig. 4 links dargestellte fahrerlose Fahrzeug 8 aufgezeigt ist.

Der elektrische Motor des Hubantriebs 9 kann ausgebildet und eingerichtet sein, in einem an den elektrischen Steckverbinder 22 der Ladestation 21 angekoppelten Zustand des elektrischen Gegensteckverbinders 23 des fahrerlosen Fahrzeugs 8 elektrische Energie direkt aus einem elektrischen Netz 24 zu beziehen, an das die Ladestation 21 angeschlossen ist.

Wie insbesondere Fig. 5 in Verbindung mit Fig. 4 zeigt, kann in einer solchen Ausführungsform jeder Lagerschacht 3 einen zumindest im Wesentlichen rechteckigen Querschnitt aufweisen, jeweils vier Lagerschächte 3 können mit ihren Schachtöffnungen 4 ein Quadrant auf der Fahrebene 6 bilden, wobei den jeweils vier Lagerschächten 3 zugeordnete jeweilige vier Hubspindeln 17 zentrumsnah des Quadranten angeordnet sind, derart, dass in einer Ansicht von oben der im ersten Quadranten I angeordnete Lagerschacht 3 seine erste Hubspindel 17.1 in der linken unteren Ecke aufweist, der im zweiten Quadranten II angeordnete Lagerschacht 3 seine zweite Hubspindel 17.2 in der rechten unteren Ecke aufweist, der im dritten Quadranten III angeordnete Lagerschacht 3 seine dritte Hubspindel 17.3 in der rechten oberen Ecke aufweist und der im vierten Quadranten IV angeordnete Lagerschacht 3 seine vierte Hubspindel 17.4 in der linken oberen Ecke aufweist.

In allen Ausführungsformen kann das fahrerlose Fahrzeug 8 wenigstens einen Tragarm 16 aufweisen, der ausgebildet ist zum Aufnehmen wenigstens eines Behälters 5 oder eines Stapels von mehreren Behältern 5 gleichzeitig, um diese gemeinsam innerhalb der Fahrebene 6 transportieren zu können.

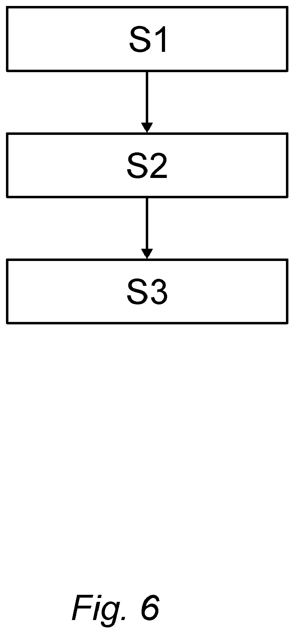

In der Fig. 6 ist schematisch das Verfahren zum Anheben und/oder Absenken wenigstens eines Behälters 5 oder eines Stapels von mehreren Behältern 5 innerhalb eines Lagerschachtes 3 in einem Waren-Speicher 2 eines Waren-Lagersystems 1 aufgezeigt.

In einem ersten Schritt S1 des Verfahrens erfolgt ein automatisches Fahren eines fahrerlosen Fahrzeugs 8, das ausgebildet und eingerichtet ist zum automatischen Fahren in einer Fahrebene 6 oberhalb von Lagerschächten 3 des Waren-Speichers 2 entlang von Führungen 7 in der Fahrebene 6, so dass das fahrerlose Fahrzeug 8 an eine obere Schachtöffnung 4 eines beliebigen Lagerschachtes 3 des Waren-Speichers 2 bewegt werden kann, indem das fahrerlose Fahrzeug 8 wahlweise in der ersten Fahrtrichtung und/oder in der zweiten Fahrtrichtung entlang der Führungen 7 selbstangetrieben gefahren wird.

In einem zweiten Schritt S2 des Verfahrens erfolgt ein automatisches Ankoppeln einer Antriebsgegenkupplung 12 des fahrerlosen Fahrzeugs 8, die von einem Hubantrieb 11 des fahrerlosen Fahrzeugs 8 antreibbar ist, an eine Antriebskupplung 10 einer stationär in dem betreffenden Lagerschacht 3 angeordneten Hubvorrichtung 9 des Waren-Speichers 2, derart, dass ein Drehmoment von dem Hubantrieb 11 des fahrerlosen Fahrzeugs 8 auf die Hubvorrichtung 9 des Waren-Speichers 2 übertragen werden kann, um einen im Lagerschacht 3 vorhandenen Behälter 5 oder einen im Lagerschacht 3 vorhandenen Stapel von mehreren Behältern 5 mittels der Hubvorrichtung 9 wahlweise anheben oder absenken zu können.

In einem dritten Schritt S3 des Verfahrens erfolgt ein automatisches Antreiben des Hubantriebs 11 des fahrerlosen Fahrzeugs 8, um den im Lagerschacht 3 vorhandenen Behälter 5 oder den im Lagerschacht 3 vorhandenen Stapel von mehreren Behältern 5 mittels der Hubvorrichtung 9 anzuheben oder abzusenken.

In einem optionalen weiteren Schritt des Verfahren kann ein automatisches Entnehmen von elektrischer Energie aus einer stationären Ladestation 21 des Waren-Speichers 1 in einen elektrischen Energiespeicher 13 des fahrerlosen Fahrzeugs 8 und/oder in den Hubantrieb 11 des fahrerlosen Fahrzeugs 8 erfolgen, während der Hubantrieb 11 des fahrerlosen Fahrzeugs 8 die Hubvorrichtung 9 des Waren-Speichers 2 zum Anheben oder Absenken eines im Lagerschacht 3 vorhandenen Behälters 5 oder des im Lagerschacht 3 vorhandenen Stapels von mehreren Behältern 5 antreibt.

## Patentansprüche

1. Waren-Lagersystem (1), aufweisend:
- einen Waren-Speicher (2), der mehrere Lagerschächte (3) aufweist, die in mehreren Reihen und Spalten unmittelbar nebeneinander angeordnet sind, derart, dass jeder Lagerschacht (3) über eine obere Schachtöffnung (4) zugänglich ist zum Entnehmen ein oder mehrerer Behälter (5) aus dem jeweiligen Lagerschacht (3) von oben und/oder zum Einsetzen ein oder mehrerer Behälter (5) in den jeweiligen Lagerschacht (3) von oben, so dass mehrere Behälter (5) in einem vertikalen Stapel innerhalb des jeweiligen Lagerschachtes (3) gelagert werden können,
- eine oberhalb der Lagerschächte (3) angeordnete Fahrebene (6), welche Führungen (7) aufweist, die ausgebildet sind zum Fahren eines fahrerlosen Fahrzeugs (8) innerhalb der Fahrebene (6) wahlweise in einer ersten Fahrtrichtung, um zwischen mehreren Schachtöffnungen (4) von mehreren in einer Reihe angeordneten Lagerschächten (3) wechseln zu können, und in einer zweiten Fahrtrichtung, um zwischen mehreren Schachtöffnungen (4) von mehreren in einer Spalte angeordneten Lagerschächten (3) wechseln zu können,
- wenigstens ein fahrerloses Fahrzeug (8), das ausgebildet und eingerichtet ist zum automatischen Fahren in der Fahrebene (6) entlang der Führungen (7), so dass das fahrerlose Fahrzeug (8) an die Schachtöffnung (4) eines beliebigen Lagerschachtes (3) des Waren-Speichers (2) bewegt werden kann, indem das fahrerlose Fahrzeug (8) wahlweise in der ersten Fahrtrichtung und/oder in der zweiten Fahrtrichtung entlang der Führungen (7) selbstangetrieben fährt,
- mehrere an dem Waren-Speicher (2) angeordnete Hubvorrichtungen (9), von denen jeweils eine Hubvorrichtung (9) ausgebildet ist zum Anheben und Absenken mindestens eines Stapels von mehreren Behältern (5), die in einem jeweiligen Lagerschacht (3) gelagert sind, **dadurch gekennzeichnet, dass**
die mehreren Hubvorrichtungen (9) antriebslos ausgebildet sind und jede Hubvorrichtung (9) oder eine jeweilige Gruppe von mehreren Hubvorrichtungen (9) eine Antriebskupplung (10) aufweist, die ausgebildet ist zum Einspeisen eines Antriebsmoments in die Hubvorrichtung (9), wobei die Antriebskupplungen (10) von der Fahrebene (6) aus zugänglich sind, und dass
das wenigstens eine fahrerlose Fahrzeug (8) einen Hubantrieb (11) mit einer zu den Antriebskupplungen (10) der Hubvorrichtungen (9) korrespondierenden Antriebsgegenkupplung (12) aufweist, die ausgebildet ist zum automatischen Ankuppeln an eine der Antriebskupplungen (10) der Hubvorrichtungen (9), wenn sich das fahrerlose Fahrzeug (8) in ankuppelbarer Nähe zu der jeweiligen Antriebskupplung (10) der Hubvorrichtung (9) befindet.

2. Waren-Lagersystem nach Anspruch 1, **dadurch gekennzeichnet, dass** die Antriebsgegenkupplung (12) an dem fahrerlosen Fahrzeug (8) mittels einer Stelleinrichtung (25) zwischen einer Kopplungsstellung, in welcher die Antriebsgegenkupplung (12) mit der Antriebskupplung (10) einer Hubvorrichtung (9) in Eingriff steht, wenn sich das fahrerlose Fahrzeug (8) in ankuppelbarer Nähe zu der jeweiligen Antriebskupplung (10) der Hubvorrichtung (9) befindet, und einer Freigabestellung, in welcher die Antriebsgegenkupplung (12) von der Antriebskupplung (10) der Hubvorrichtung (9) getrennt ist, automatisch verstellbar gelagert ist.

3. Waren-Lagersystem nach Anspruch 1 oder 2, **dadurch gekennzeichnet, dass** das fahrerlose Fahrzeug (8) einen elektrischen Energiespeicher (13) und einen an den elektrischen Energiespeicher (13) angeschlossenen Hubantrieb (11) aufweist, der als elektrischer Motor ausgebildet ist, an dessen Motorwelle die Antriebsgegenkupplung (12) angeschlossen ist.

4. Waren-Lagersystem nach Anspruch 3, **gekennzeichnet durch** wenigstens eine am Waren-Speicher (2) angeordnete **La**destation (21), die ausgebildet und eingerichtet ist zum Aufladen des elektrischen Energiespeichers (13) des fahrerlosen Fahrzeugs (8), wobei die Ladestation (21) einen elektrischen Steckverbinder (22) aufweist, über den elektrische Energie aus der Ladestation (21) abgegeben werden kann, und das fahrerlose Fahrzeug (8) einen zum elektrischen Steckverbinder (22) der Ladestation (21) korrespondierenden elektrischen Gegensteckverbinder (23) aufweist, wobei der elektrische Gegensteckverbinder (23) des fahrerlosen Fahrzeugs (8) an den elektrischen Steckverbinder (22) der Ladestation (21) elektrisch ankoppelbar ist, wenn sich das fahrerlose Fahrzeug (8) in ankuppelbarer Nähe zu der jeweiligen Antriebskupplung (10) der Hubvorrichtung (9) befindet.

5. Waren-Lagersystem nach Anspruch 4, **dadurch gekennzeichnet, dass** der elektrische Motor des Hubantriebs (11) ausgebildet und eingerichtet ist, in einem an den elektrischen Steckverbinder (22) der Ladestation (21) angekoppelten Zustand des elektrischen Gegensteckverbinders (23) des fahrerlosen Fahrzeugs (8) elektrische Energie direkt aus einem elektrischen Netz (24) zu beziehen, an das die Ladestation (21) angeschlossen ist.

6. Waren-Lagersystem nach einem der Ansprüche 1 bis 5, **dadurch gekennzeichnet, dass** die jeweilige Antriebskupplung (10) der Hubvorrichtung (9) an eine Hubspindel (17) angeschlossen ist, die sich entlang der Höhe wenigstens eines Lagerschachtes (3) erstreckt, wobei an der Hubspindel (17) eine sich in den Lagerschacht (3) erstreckende Plattform (18) zum Abstellen von Behältern (5) höhenverstellbar gelagert ist, derart, dass durch ein Antreiben der Hubspindel (17) über die Antriebskupplung (10) hinweg, die Plattform (18) innerhalb des Lagerschachtes (3) angehoben werden kann, um die auf der Plattform (18) in einem Stapel abgestellten Behälter (5) über die Schachtöffnung (4) hinweg nach oben aus dem Lagerschacht (3) herausheben zu können, und/oder abgesenkt werden kann, um die auf der Plattform (18) in einem Stapel abgestellten Behälter (5) in die Schachtöffnung (4) hinein nach unten in den Lagerschacht (3) hinein absenken zu können.

7. Waren-Lagersystem nach einem der Ansprüche 1 bis 5, **dadurch gekennzeichnet, dass** die jeweilige Antriebskupplung (10) der Hubvorrichtung (9) an eine Hubspindel (17) angeschlossen ist, die sich entlang der Höhe wenigstens eines Lagerschachtes (3) erstreckt, an dem Lagerschacht (3) sich jeweils wenigstens eine Hilfshubspindel (17a) erstreckt, welche zusammen mit der Hubspindel (17) antreibbar ist, wobei die Hubspindel (17) und die Hilfshubspindel (17a) dem Stapel an Behältern (5) im Lagerschacht (3) gegenüberliegend angeordnet sind und jeweils ein Spindelgewinde aufweisen, das ausgebildet ist zum Eingreifen von Tragabschnitten (19) an seitlichen Randbereichen der Behälter (5), derart, dass in die Spindelgewinde der Hubspindel (17) und der Hilfshubspindel (17a) eingreifende Behälter (5) durch ein Drehen von Hubspindel (17) und Hilfshubspindel (17a) einzeltragend angehoben und/oder abgesenkt werden können.

8. Waren-Lagersystem nach Anspruch 7, **dadurch gekennzeichnet, dass** die Hubspindeln (17) und die Hilfshubspindeln (17a) in einer vertikalen Höhe (H) über dem Boden (20) des Waren-Speichers (2) enden, welche mindestens so hoch ist, wie die Höhe eines Behälters (5), so dass die von den Hubspindeln (17) und den Hilfshubspindeln (17a) geführten Behälter (5) in einer bodennahen Höhenposition aus dem Eingriff mit den Spindelgewinden der Hubspindeln (17) und Hilfshubspindeln (17a) entlassen werden können, um einen jeweiligen von den Hubspindeln (17) und Hilfshubspindeln (17a) gelösten Behälter (5) in einer unteren Ebene aus dem Waren-Speicher (2) ausschleusen zu können.

9. Waren-Lagersystem nach einem der Ansprüche 6 bis 8, **dadurch gekennzeichnet, dass** jeder Lagerschacht (3) einen zumindest im Wesentlichen rechteckigen Querschnitt aufweist, jeweils zwei oder vier Lagerschächte (3) mit ihren Schachtöffnungen (4) ein Quadrant auf der Fahrebene (6) bilden, wobei den jeweils zwei oder vier Lagerschächten (3) zugeordnete jeweilige zwei oder vier Hubspindeln (17) zentrumsnah des Quadranten angeordnet sind, derart, dass in einer Ansicht von oben der im ersten Quadranten (I) angeordnete Lagerschacht (3) seine erste Hubspindel (17.1) in der linken unteren Ecke aufweist, der im zweiten Quadranten (II) angeordnete Lagerschacht (3) seine zweite Hubspindel (17.2) in der rechten unteren Ecke aufweist, der im dritten Quadranten (III) angeordnete Lagerschacht (3) seine dritte Hubspindel (17.3) in der rechten oberen Ecke aufweist und/oder der im vierten Quadranten (IV) angeordnete Lagerschacht (3) seine vierte Hubspindel (17.4) in der linken oberen Ecke aufweist.

10. Waren-Lagersystem nach einem der Ansprüche 1 bis 9, **dadurch gekennzeichnet, dass** das fahrerlose Fahrzeug (8) wenigstens einen Tragarm (16) aufweist, der ausgebildet ist zum Aufnehmen wenigstens eines Behälters (5) oder eines Stapels von mehreren Behältern (5) gleichzeitig, um diese gemeinsam innerhalb der Fahrebene (6) transportieren zu können.

11. Verfahren zum Anheben und/oder Absenken wenigstens eines Behälters (5) oder eines Stapels von mehreren Behältern (5) innerhalb eines Lagerschachtes (3) in einem Waren-Speicher (2) eines Waren-Lagersystems (1) nach einem der Ansprüche 1 bis 10, aufweisend die Schritte:
- automatisches Fahren eines fahrerlosen Fahrzeugs (8), das ausgebildet und eingerichtet ist zum automatischen Fahren in einer Fahrebene (6) oberhalb von **La**gerschächten (3) des Waren-Speichers (2) entlang von Führungen (7) in der Fahrebene (6), so dass das fahrerlose Fahrzeug (8) an eine obere Schachtöffnung (4) eines beliebigen Lagerschachtes (3) des Waren-Speichers (2) bewegt werden kann, indem das fahrerlose Fahrzeug (8) wahlweise in der ersten Fahrtrichtung und/oder in der zweiten Fahrtrichtung entlang der Führungen (7) selbstangetrieben gefahren wird,
- automatisches Ankoppeln einer Antriebsgegenkupplung (12) des fahrerlosen Fahrzeugs (8), die von einem Hubantrieb (11) des fahrerlosen Fahrzeugs (8) antreibbar ist, an eine Antriebskupplung (10) einer stationär in dem betreffenden Lagerschacht (3) angeordneten Hubvorrichtung (9) des Waren-Speichers (2), derart, dass ein Drehmoment von dem Hubantrieb (11) des fahrerlosen Fahrzeugs (8) auf die Hubvorrichtung (9) des Waren-Speichers (2) übertragen werden kann, um einen im Lagerschacht (3) vorhandenen Behälter (5) oder einen im Lagerschacht (3) vorhandenen Stapel von mehreren Behältern (5) mittels der Hubvorrichtung (9) wahlweise anheben oder absenken zu können,
- automatisches Antreiben des Hubantriebs (11) des fahrerlosen Fahrzeugs (8), um den im Lagerschacht (3) vorhandenen Behälter (5) oder den im Lagerschacht (3) vorhandenen Stapel von mehreren Behältern (5) mittels der Hubvorrichtung (9) anzuheben oder abzusenken.

12. Verfahren nach Anspruch 11, aufweisend den weiteren Schritt des automatischen Entnehmens von elektrischer Energie aus einer stationären Ladestation (21) des Waren-Speichers (2) in einen elektrischen Energiespeicher (13) des fahrerlosen Fahrzeugs (8) und/oder in den Hubantrieb (11) des fahrerlosen Fahrzeugs (8) während der Hubantrieb (11) des fahrerlosen Fahrzeugs (8) die Hubvorrichtung (9) des Waren-Speichers (2) zum Anheben oder Absenken eines im Lagerschacht (3) vorhandenen Behälters (5) oder des im Lagerschacht (3) vorhandenen Stapels von mehreren Behältern (5) antreibt.

## Claims

1. Goods storage system (1), comprising:
- a goods storage unit (2), which has several storage shafts (3) arranged in several rows and columns directly next to each other, such that each storage shaft (3) is accessible via an upper shaft opening (4) for removing one or more containers (5) from the respective storage shaft (3) from above and/or for inserting one or more containers (5) into the respective storage shaft (3) from above, so that a plurality of containers (5) can be stored in a vertical stack within the respective storage shaft (3),
- a driving plane (6) arranged above the storage shafts (3), which has guides (7) that are designed to move a driverless vehicle (8) within the driving plane (6) either in a first direction of travel in order to be able to switch between several shaft openings (4) of several storage shafts (3) arranged in a row, and in a second direction of travel in order to be able to switch between several shaft openings (4) of several storage shafts (3) arranged in a column,
- at least one driverless vehicle (8) designed and equipped to travel automatically in the driving plane (6) along the guides (7), so that the driverless vehicle (8) can be moved to the shaft opening (4) of any storage shaft (3) of the goods storage unit (2) by the driverless vehicle (8) traveling self-propelled along the guides (7) either in the first direction of travel and/or in the second direction of travel,
- a plurality of lifting devices (9) arranged on the goods storage unit (2), each of which lifting devices (9) is designed to lift and lower at least one stack of a plurality of containers (5) stored in a respective storage shaft (3), **characterized in that**
the plurality of lifting devices (9) are designed to be non-driven, and each lifting device (9) or a respective group of a plurality of lifting devices (9) has a drive coupling (10) which is designed to feed a drive torque into the lifting device (9), wherein the drive couplings (10) are accessible from the driving plane (6), and that
the at least one driverless vehicle (8) has a lifting drive (11) with a drive counter-coupling (12) corresponding to the drive couplings (10) of the lifting devices (9), which is designed to automatically couple to one of the drive couplings (10) of the lifting devices (9) when the driverless vehicle (8) is in coupling proximity to the respective drive coupling (10) of the lifting device (9).

2. Goods storage system according to claim 1, **characterized in that** the drive counter-coupling (12) is automatically adjustable mounted on the driverless vehicle (8) by means of an actuating device (25) between a coupling position, in which the drive counter-coupling (12) is engaged with the drive coupling (10) of a lifting device (9) when the driverless vehicle (8) is in a position where it can be coupled to the respective drive coupling (10) of the lifting device (9), and a release position, in which the drive counter-coupling (12) is separated from the drive coupling (10) of the lifting device (9).

3. Goods storage system according to claim 1 or 2, **characterized in that** the driverless vehicle (8) has an electrical energy storage device (13) and a lifting drive (11) connected to the electrical energy storage device (13), which is designed as an electric motor, to whose motor shaft the drive counter-coupling (12) is connected.

4. Goods storage system according to claim 3, **characterized by** at least one charging station (21) arranged on the goods storage unit (2), which is designed and equipped to charge the electrical energy storage device (13) of the driverless vehicle (8), wherein the charging station (21) has an electrical plug connector (22) via which electrical energy can be supplied from the charging station (21), and the driverless vehicle (8) has an electrical mating connector (23) corresponding to the electrical plug connector (22) of the charging station (21), wherein the electrical mating connector (23) of the driverless vehicle (8) can be electrically coupled to the electrical plug connector (22) of the charging station (21) when the driverless vehicle (8) is in a position where it can be coupled to the respective drive coupling (10) of the lifting device (9).

5. Goods storage system according to claim 4, **characterized in that** the electric motor of the lifting drive (11) is designed and equipped to draw electric power directly from an electrical power grid (24) to which the charging station (21) is connected, when the electric mating connector (23) of the driverless vehicle (8) is coupled to the electrical plug connector (22) of the charging station (21).

6. Goods storage system according to one of claims 1 to 5, **characterized in that** the respective drive coupling (10) of the lifting device (9) is connected to a lifting spindle (17) which extends along the height of at least one storage shaft (3), wherein a platform (18) extending into the storage shaft (3) for storing containers (5) is mounted on the lifting spindle (17) in such a way that, by driving the lifting spindle (17) via the drive coupling (10), the platform (18) can be raised within the storage shaft (3) in order to lift the containers (5) stacked on the platform (18) out of the storage shaft (3) upwards via the shaft opening (4), and/or can be lowered in order to lower the containers (5) stacked on the platform (18) down into the storage shaft (3) via the shaft opening (4).

7. Goods storage system according to one of claims 1 to 5, **characterized in that** the respective drive coupling (10) of the lifting device (9) is connected to a lifting spindle (17) which extends along the height of at least one storage shaft (3), and on which at least one auxiliary lifting spindle (17a) extends on the storage shaft (3), which can be driven together with the lifting spindle (17), wherein the lifting spindle (17) and the auxiliary lifting spindle (17a) are arranged opposite the stack of containers (5) in the storage shaft (3) and each has a spindle thread that is designed to engage with support sections (19) on lateral edge areas of the containers (5) such that containers (5) engaging in the spindle threads of the lifting spindle (17) and the auxiliary lifting spindle (17a) can be lifted and/or lowered individually by rotating the lifting spindle (17) and the auxiliary lifting spindle (17a).

8. Goods storage system according to claim 7, **characterized in that** the lifting spindles (17) and the auxiliary lifting spindles (17a) end at a vertical height (H) above the floor (20) of the goods storage unit (2) which is at least as high as the height of a container (5), so that the containers (5) guided by the lifting spindles (17) and the auxiliary lifting spindles (17a) can be released from engagement with the spindle threads of the lifting spindles (17) and auxiliary lifting spindles (17a) at a height close to the floor, so that a respective container (5) released from the lifting spindles (17) and auxiliary lifting spindles (17a) can be discharged from the goods storage unit (2) at a lower level.

9. Goods storage system according to one of claims 6 to 8, **characterized in that** each storage shaft (3) has at least a substantially rectangular cross-section, each two or four storage shafts (3) with their shaft openings (4) form a quadrant on the driving plane (6), wherein the respective two or four lifting spindles (17) associated with the respective two or four bearing shafts (3) are arranged close to the center of the quadrant in such a way that, in a view from above, the storage shaft (3) arranged in the first quadrant (I) has its first lifting spindle (17.1) in the lower left corner, the storage shaft (3) arranged in the second quadrant (II) has its second lifting spindle (17.2) in the lower right corner, the storage shaft (3) arranged in the third quadrant (III) has its third lifting spindle (17.3) in the upper right corner, and/or the storage shaft (3) arranged in the fourth quadrant (IV) has its fourth lifting spindle (17.4) in the upper left corner.

10. Goods storage system according to one of claims 1 to 9, **characterized in that** the driverless vehicle (8) has at least one support arm (16) which is designed to hold at least one container (5) or a stack of several containers (5) simultaneously in order to be able to transport them together within the driving plane (6).

11. Method for lifting and/or lowering at least one container (5) or a stack of several containers (5) within a storage shaft (3) in a goods storage unit (2) of a goods storage system (1) according to one of claims 1 to 10, comprising the steps:
- automatic driving of a driverless vehicle (8) which is designed and equipped for automatic driving in a driving plane (6) above storage shafts (3) of the goods storage unit (2) along guides (7) in the driving plane (6), so that the driverless vehicle (8) can be moved to an upper shaft opening (4) of any storage shaft (3) of the goods storage unit (2) by driving the driverless vehicle (8) in a self-propelled manner along the guides (7) either in the first direction of travel and/or in the second direction of travel,
- automatic coupling of a drive counter-coupling (12) of the driverless vehicle (8), which can be driven by a lifting drive (11) of the driverless vehicle (8), to a drive coupling (10) of a lifting device (9) of the goods storage unit (2) arranged stationary in the relevant storage shaft (3), in such a way that a torque can be transmitted from the lifting drive (11) of the driverless vehicle (8) to the lifting device (9) of the goods storage unit (2) in order to selectively lift or lower a container (5) or a stack of several containers (5) present in the storage shaft (3) by means of the lifting device (9),
- automatically driving the lifting drive (11) of the driverless vehicle (8) in order to lift or lower the container (5) present in the storage shaft (3) or the stack of several containers (5) present in the storage shaft (3) by means of the lifting device (9).

12. Method according to claim 11, comprising the further step of automatically drawing electrical energy from a stationary charging station (21) of the goods storage unit (2) into an electrical energy storage device (13) of the driverless vehicle (8) and/or into the lifting drive (11) of the driverless vehicle (8) while the lifting drive (11) of the driverless vehicle (8) drives the lifting device (9) of the goods storage unit (2) to raise or lower a container (5) or the stack of several containers (5) present in the storage shaft (3).

## Revendications

1. Système de stockage de marchandises (1) comprenant:
- un entrepôt de marchandises (2), qui comporte plusieurs compartiments de stockage (3) disposés en plusieurs rangées et colonnes directement les uns à côté des autres, de telle sorte que chaque compartiment de stockage (3) est accessible par une ouverture de puits (4) pour retirer un ou plusieurs conteneurs (5) du compartiment de stockage (3) correspondant par le haut et/ou pour insérer un ou plusieurs conteneurs (5) dans le compartiment de stockage (3) respectif par le haut, de sorte que plusieurs conteneurs (5) peuvent être stockés dans une pile verticale à l'intérieur du compartiment de stockage (3) respectif,
- un plan de déplacement (6) disposé au-dessus des compartiments de stockage (3), qui comporte des guides (7) conçus pour déplacer un véhicule sans conducteur (8) à l'intérieur du plan de déplacement (6) au choix dans un premier sens de déplacement afin de pouvoir passer entre plusieurs ouvertures de puits (4) de plusieurs compartiments de stockage (3) disposés en rangée, et dans un deuxième sens de déplacement, afin de pouvoir passer entre plusieurs ouvertures de puits (4) de plusieurs compartiments de stockage (3) disposés en colonne,
- au moins un véhicule sans conducteur (8) conçu et équipé pour circuler automatiquement dans le plan de déplacement (6) le long des guides (7), de sorte que le véhicule sans conducteur (8) peut être déplacé vers l'ouverture de puits (4) d'un compartiment de stockage (3) quelconque du entrepôt de marchandises (2) en se déplaçant de manière autonome le long des guides (7) au choix dans le premier sens de déplacement et/ou dans le deuxième sens de déplacement,
- plusieurs dispositifs de levage (9) disposés sur le entrepôt de marchandises (2), dont chacun est conçu pour soulever et abaisser au moins une pile de plusieurs conteneurs (5) stockés dans un compartiment de stockage (3) respectif, **caractérisé en ce que**
les multiples dispositifs de levage (9) sont conçus sans entraînement et chaque dispositif de levage (9) ou un groupe respectif de plusieurs dispositifs de levage (9) comporte un accouplement d'entraînement (10) qui est conçu pour transmettre un couple d'entraînement au dispositif de levage (9), les accouplements d'entraînement (10) étant accessibles depuis le plan de déplacement (6), et **en ce que**
le au moins un véhicule sans conducteur (8) comportent un entraînement de levage (11) avec un contre-accouplement d'entraînement (12) correspondant aux accouplements d'entraînement (10) des dispositifs de levage (9), qui est conçu pour s'accoupler automatiquement à l'un des accouplements d'entraînement (10) des dispositifs de levage (9) lorsque le véhicule sans conducteur (8) se trouve à proximité de l'accou-plage de l'accouplement d'entraînement (10) correspondant du dispositif de levage (9).

2. Système de stockage de marchandises selon la revendication 1, **caractérisé en ce que** le contre-accouplement d'entraînement (12) est monté sur le véhicule sans conducteur (8) à réglage automatique au moyen d'un dispositif de réglage (25) entre une position d'accouplement, dans laquelle le contre-accouplement d'entraînement (12) est en prise avec l'accouplement d'entraînement (10) d'un dispositif de levage (9) lorsque le véhicule sans conducteur (8) se trouve à proximité de l'accouplage de l'accouplement d'entraînement (10) correspondant du dispositif de levage (9) et une position de libération dans laquelle le contre-accouplement d'entraînement (12) est séparé de l'accouplement d'entraînement (10) du dispositif de levage (9).

3. Système de stockage de marchandises selon la revendication 1 ou 2, **caractérisé en ce que** le véhicule sans conducteur (8) comporte un accumulateur d'énergie électrique (13) et un entraînement de levage (11) raccordé à l'accumulateur d'énergie électrique (13), qui est conçu comme un moteur électrique, à l'arbre duquel est raccordé le contre-accouplement d'entraînement (12).

4. Système de stockage de marchandises selon la revendication 3, **caractérisé par** au moins une station de recharge (21) disposée sur le entrepôt de marchandises (2), qui est conçue et équipée pour recharger l'accumulateur d'énergie électrique (13) du véhicule sans conducteur (8), la station de recharge (21) comportant un connecteur électrique (22) par l'intermédiaire duquel l'énergie électrique peut être délivrée à partir de la station de recharge (21), et le véhicule sans conducteur (8) comportant un connecteur électrique complémentaire (23) correspondant au connecteur électrique (22) de la station de recharge (21), le connecteur électrique complémentaire (23) du véhicule sans conducteur (8) pouvant être couplé électriquement au connecteur électrique (22) de la station de recharge (21) lorsque le véhicule sans conducteur (8) se trouve à proximité de l'accouplement d'entraînement (10) correspondant du dispositif de levage (9).

5. Système de stockage de marchandises selon la revendication 4, **caractérisé en ce que** le moteur électrique de l'entraînement de levage (11) est conçu et agencé de manière à ce que, lorsque le connecteur électrique complémentaire (23) du véhicule sans conducteur (8) est accouplé au connecteur électrique (22) de la station de recharge (21) de prélever de l'énergie électrique directement à partir d'un réseau électrique (24) auquel la station de recharge (21) est raccordée.

6. Système de stockage de marchandises selon l'une des revendications 1 à 5, **caractérisé en ce que** l'accouplement d'entraînement (10) respectif du dispositif de levage (9) est raccordé à une broche de levage (17) qui s'étend sur la hauteur d'au moins un compartiment de stockage (3), une plate-forme (18) s'étendant dans le compartiment de stockage (3) pour le dépôt de conteneurs (5) étant montée réglable en hauteur sur la broche de levage (17) de manière à ce que, par entraînement de la broche de levage (17) via l'accouplement d'entraînement (10), la plate-forme (18) puisse être soulevée à l'intérieur du compartiment de stockage (3) afin de pouvoir sortir les conteneurs (5) empilés sur la plate-forme (18) puissent être retirés du compartiment de stockage (3) par le haut au-delà de l'ouverture du puits (4), et/ou abaissée afin que les conteneurs (5) empilés sur la plate-forme (18) puissent être abaissés dans le compartiment de stockage (3) par le bas dans l'ouverture du puits (4).

7. Système de stockage de marchandises selon l'une des revendications 1 à 5, **caractérisé en ce que** l'accouplement d'entraînement (10) respectif du dispositif de levage (9) est relié à une broche de levage (17) qui s'étend sur la hauteur d'au moins un compartiment de stockage (3), au moins une broche de levage auxiliaire (17a) s'étendant sur le compartiment de stockage (3), laquelle peut être entraînée conjointement avec la broche de levage (17), la broche de levage (17) et la broche de levage auxiliaire (17a) étant disposées en face de la pile de conteneurs (5) dans le compartiment de stockage (3) et comportent chacune un filetage de vis conçu pour s'engager avec des parties de support (19) au niveau des bords latéraux des conteneurs (5), de telle sorte que les conteneurs (5) s'engageant dans les filetages de vis de la broche de levage (17) et de la broche de levage auxiliaire (17a) puissent être soulevés et/ou abaissés individuellement par rotation de la broche de levage (17) et de la broche de levage auxiliaire (17a).

8. Système de stockage de marchandises selon la revendication 7, **caractérisé en ce que** les broches de levage (17) et les broches de levage auxiliaires (17a) se terminent à une hauteur verticale (H) au-dessus du fond (20) du entrepôt de marchandises (2) qui est au moins aussi élevée que la hauteur d'un conteneur (5), de sorte que les conteneurs (5) guidés par les broches de levage (17) et les broches de levage auxiliaires (17a) puissent être libérés de l'engagement avec les filetages de vis des broches de levage (17) et des broches de levage auxiliaires (17a) dans une position en hauteur proche du sol afin de pouvoir évacuer un conteneur (5) respectif, libéré des broches de levage (17) et des broches de levage auxiliaires (17a), du entrepôt de marchandises (2) à un niveau inférieur.

9. Système de stockage de marchandises selon l'une des revendications 6 à 8, **caractérisé en ce que** chaque compartiment de stockage (3) présente une section transversale au moins essentiellement rectangulaire, deux ou quatre compartiments de stockage (3) formant respectivement avec leurs ouvertures de puits (4) forment un quadrant sur le plan de déplacement (6), les deux ou quatre broches de levage (17) associées respectivement aux deux ou quatre compartiments de stockage (3) étant disposées près du centre du quadrant, de telle sorte que, dans une vue de dessus, le compartiment de stockage (3) disposé dans le premier quadrant (I) présente sa première broche de levage (17.1) dans le coin inférieur gauche, le compartiment de stockage (3) disposé dans le deuxième quadrant (II) présente sa deuxième broche de levage (17.2) dans le coin inférieur droit, le compartiment de stockage (3) disposé dans le troisième quadrant (III) présente sa troisième broche de levage (17.3) dans le coin supérieur droit et/ou le compartiment de compartiment de stockage (3) disposé dans le quatrième quadrant (IV) présente sa quatrième broche de levage (17.4) dans le coin supérieur gauche.

10. Système de stockage de marchandises selon l'une des revendications 1 à 9, **caractérisé en ce que** le véhicule sans conducteur (8) comporte au moins un bras de support (16) qui est conçu pour recevoir au moins un conteneur (5) ou une pile de plusieurs conteneurs (5) simultanément afin de pouvoir les transporter ensemble à l'intérieur du plan de déplacement (6).

11. Procédé pour soulever et/ou abaisser au moins un conteneur (5) ou une pile de plusieurs conteneurs (5) à l'intérieur d'un compartiment de stockage (3) dans un entrepôt de marchandises (2) d'un système de stockage de marchandises (1) selon l'une des revendications 1 à 10, comprenant les étapes suivantes :
- conduire automatiquement d'un véhicule sans conducteur (8) qui est conçu et équipé pour rouler automatiquement dans un plan de déplacement (6) au-dessus des compartiments de stockage (3) du entrepôt de merchandises (2) le long de guides (7) dans le plan de déplacement (6), de sorte que le véhicule sans conducteur (8) peut être déplacé vers une ouverture de puits (4) d'un compartiment de stockage (3) quelconque du entrepôt de marchandises (2) en déplaçant le véhicule sans conducteur (8) de manière autonome dans le premier sens de déplacement et/ou dans le deuxième sens de déplacement le long des guides (7),
- accoupler automatiquement d'un contre-accouplement d'entraînement (12) du véhicule sans conducteur (8), qui peut être entraîné par un entraînement de levage (11) du véhicule sans conducteur (8), à un accouplement d'entraînement (10) d'un dispositif de levage (9) du entrepôt de marchandises (2) disposé de manière stationnaire dans le compartiment de stockage (3) concerné, de telle sorte qu'un couple puisse être transmis par l'entraînement de levage (11) du véhicule sans conducteur (8) au dispositif de levage (9) du entrepôt de marchandises (2) afin de pouvoir, au choix, soulever ou abaisser un conteneur (5) ou une pile de plusieurs conteneurs (5) présente dans le compartiment de stockage (3) au moyen du dispositif de levage (9),
- entraîner automatiquement d'entraînement de levage (11) du véhicule sans conducteur (8) afin de soulever ou d'abaisser le conteneur (5) présent dans le compartiment de stockage (3) ou la pile de plusieurs conteneurs (5) présente dans le compartiment de stockage (3) à l'aide du dispositif de levage (9).

12. Procédé selon la revendication 11, comprenant l'étape supplémentaire consistant à prélever automatiquement de l'énergie électrique d'une station de recharge (21) du entrepôt de marchandises (2) vers un accumulateur d'énergie électrique (13) du véhicule sans conducteur (8) et/ou dans l'entraînement de levage (11) du véhicule sans conducteur (8) pendant que l'entraînement de levage (11) du véhicule sans conducteur (8) entraîne le dispositif de levage (9) du entrepôt de marchandises (2) pour soulever ou abaisser un conteneur (5) présent dans le compartiment de stockage (3) ou de la pile de plusieurs conteneurs (5) présente dans le compartiment de stockage (3).
